# EUROPÄISCHE PATENTSCHRIFT

(11) **EP 0 360 741 B1**
(45) Veröffentlichungstag und Bekanntmachung des Hinweises auf die Patenterteilung: **29.11.1995**
(21) Anmeldenummer: 89810656.2
(22) Anmeldetag: 01.09.1989
(51) Int. Cl.: F16B 5/00, E04B 1/61, B62D 27/02, B32B 35/00, F16B 5/01, F16B 5/06, E04C 2/26

(54) **Stossverbindung von Platten und/oder Profilen**
Butt joint of plates and/or sections
Jonction en about de plaques et/ou de profilés

(30) Priorität: 19.09.1988 CH 3488/88; 23.03.1989 CH 1090/89
(43) Veröffentlichungstag der Anmeldung: 28.03.1990
(73) Patentinhaber: ALUSUISSE-LONZA SERVICES AG, 8034 Zürich (CH)
(72) Erfinder: Ehrat, Rainer, CH-8200 Schaffhausen (CH); Deubelbeiss, Urs, CH-5200 Windisch (CH); Kölliker, Willy, CH-4614 Hägendorf (CH)

(56) Entgegenhaltungen:
- WO-A-86/03536
- AU-B- 2 873 784
- DE-A- 1 479 811
- DE-A- 1 939 838
- DE-A- 3 704 112
- DE-C- 719 101
- FR-A- 2 425 009
- GB-A- 797 450
- US-A- 4 156 054

## Beschreibung

Die Erfindung betrifft eine Stossverbindung von Platten und/oder Profilen mittels eines Verbindungselements, wobei das Verbindungselement in zwei entlang der Stösse der Platten und/oder Profile aufeinanderliegenden, einen Hohlraum bildenden Nuten angeordnet ist und aus zwei von wenigstens einem zwischenliegenden Federelement in Richtung der Deckflächen der Platten bzw. Profile verschiebbaren, mit den entsprechenden Wänden der Nuten festlegbaren Spreizprofilen besteht. Weiter bezieht sich die Erfindung auf die Verwendung der Stossverbindung.

Platten und/oder Profile werden beispielsweise für die Herstellung von Karosserien, Verkleidungen, Brüstungen, Türen und ähnlichen gebäude- oder fahrzeugtechnischen Zwecken verwendet. Beim Stossverbinden zu grossflächigen Einheiten gelangen Leisten oder andere auf die Deckflächen plazierte Verbindungselemente aus Metall, Kunststoff oder Holz zur Anwendung. Die Stossverbindungen überdecken jeweils mindestens teilweise die Ränder von zwei Platten bzw. Profilen und sind mit diesen üblicherweise verschraubt oder verliebt. Mit Platten werden hier und im folgenden einstückig ausgebildete Platten, wie Holzplanken, und Mehrschichtverbundplatten, insbesondere vollflächig mit einer Kernschicht verbundene metallische Deckschichten, mit Profilen Strangpressprofile, insbesondere aus Aluminium oder einer Aluminiumlegierung, Spritzprofile und Verbundprofile bezeichnet.

Obwohl derartige Stossverbindungen mechanisch sehr stabil hergestellt werden können und bezüglich der Belastung zufriedenstellend sind, haftet ihnen als wesentlichster Nachteil an, dass damit einheitliche Flächen aus mindestens zwei Platten bzw. Profilen ohne Niveauübergang nicht gefertigt werden können. Die Stossverbindung ist immer optisch betont. Es ist daher nicht möglich, beispielsweise durch Spachteln und Überlackieren des Platten- bzw. Profilübergangs, eine einheitlich erscheinende Fläche zu bilden. Derartige Flächenausbildungen werden aber zunehmend von den Verarbeitern gefordert.

Aus der DE-A 37 04 112 sind Stossverbindungen der eingangs genannten Art für das Fügen von Bausteinen für Spielhäuser bekannt, wobei die Bausteine mittels dreiteiligen Klemmprofilen zusammengefügt werden. Die Klemmprofile bestehen aus zwei äusseren festen Teilen und einem mittig angeordneten elastischen Teil. Das Zusammenfügen der Bausteine geschieht durch Zusammendrücken der Klemmprofile und Einschieben derselben in Nuten der Bausteine. Die dabei entstehende Verbindung beruht somit auf der andauernden, durch den elastischen Teil des Klemmprofils bedingten Klemmwirkung. Eine derartige Stossverbindung eignet sich jedoch nicht für das Fügen von Platten oder Profilen zur Herstellung von grösseren Strukturen für beispielsweise gelände- oder fahrzeugtechnische Zwecke, da das gleichmässige Zusammendrücken grösserer Klemmprofile schwierig und beispielsweise nur mit aufwendigen Hilfsmitteln durchzuführen ist. Zudem genügt oft die auf der Klemmwirkung eines elastischen Teiles beruhende Festigkeit der Stossverbindung nicht.

Angesichts dieser Gegebenheiten hat sich der Erfinder die Aufgabe gestellt, eine Stossverbindung der eingangs genannten Art zu schaffen, bei welcher obige Nachteile vermieden werden und die Fuge von zwei aneinander stossenden Platten und/oder Profilen optisch nicht betont ist, und die Platten und/oder Profile, gegebenenfalls mit einer Nachbehandlung durch beispielsweise Spachteln und Überlackieren, zur Herstellung einer wenigstens auf einer Seite einheitlichen Fläche ohne unästhetische Unterbrüche durch Leisten oder sonstige äussere Verbindungshilfen verwendbar sind.

In bezug auf die Vorrichtung wird die Aufgabe erfindungsgemäss dadurch gelöst, dass die Spreizprofile Arretierungsmittel aufweisen, so dass die beiden Spreizprofile miteinander arretierbar und im arretierten Zustand mit Spiel in die Nuten einführbar sind, und die Arretierung der in die Nuten eingeführten Spreizprofile lösbar ist, und nach Lösen der Arretierung bedingt durch die Verspannung im wenigstens einen Federelement die Spreizprofile auseinandergedrückt werden, und die mit den Wänden der Nuten in Berührung kommende Aussenflächen der Spreizprofile flach und mit den Wänden der Nuten verklebbar sind.

Die an den Stirnseiten der Platten und/oder Profile, den Stössen, ausgesparten Nuten verlaufen zweckmässig parallel zu den Deckflächen und sind querschnittlich bevorzugt rechteckig oder quadratisch ausgebildet.

Ein Federelement für die Spreizprofile muss sich einerseits so zusammendrücken lassen, dass das Verbindungselement mit Spiel, insbesondere auch leicht abgewinkelt, in den von den Nuten gebildeten Hohlraum einführbar ist. Andrerseits muss das Federelement die Spreizprofile des Verbindungselements beim Lösen der Arretierung und Freiwerden der Federkraft die Spreizprofile genügend gegen die Seitenwände der Nut drücken, dass eine einwandfreie Klebverbindung gewährleistet ist.

Es ist unwesentlich, ob und auf welche Art beim Verhaken der Verbindungsprofile mechanische oder pneumatische Federkraft gespeichert wird. In allen Fällen ist jedoch bevorzugt darauf zu achten, dass das/die Federelement/e die Wirkung gleichmässig über die ganze Länge und Breite des Verbindungselements entfaltet/entfalten.

Besonders geeignet sind Federelemente aus einem zwischen den Spreizprofilen angeordneten, sich über die ganze Länge des Verbindungselements erstreckenden, elastischen Kunststoffblock, welcher die erwähnte gleichmässige Wirkung gewährleistet. Dieser besteht zweckmässig aus einem Schaumstoff, insbesondere einem geschlossenporigen Weichschaumstoff.

Weiter kann das Federelement vorteilhaft aus einer zwischen den Spreizprofilen angeordneten, einen Ueberdruck aufnehmenden elastischen Hülle bestehen. Auch nach dieser Lösung verteilt sich die Wirkung des Federelements automatisch gleichmässig über die ganze Länge des Verbindungselements.

Selbstverständlich können auch mehrere, als Spiral-, Blatt oder Tellerfeder oder als Gummipuffer ausgebildete Federelemente zwischen den Spreizprofilen angeordnet sein.

Zur Befestigung der Spreizprofile des Verbindungselements wird, vor dessen Einführen in den von den Nuten gebildeten Hohlraum, ein in der Konstruktionstechnik üblicher Kleber vollflächig, streifen- oder punktförmig auf die Nuteninnenseite und/oder auf die Aussenseite der Spreizprofile aufgetragen. Die Kraft des Federelements reicht nach dem Lösen der Arretierung aus, die zu verklebenden Flächen aufeinander zu drücken, bis der Kleber ausgehärtet ist und bindet. Nachher ist die Wirkung der Federeinheit nicht mehr notwendig, obwohl sie weiter andauert. Die beiden auseinander gespreizten Spreizprofile verleihen der Stossverbindung eine ausreichende mechanische Festigkeit. Ein vollflächig aufgetragener Kleber verhindert auch das Eindringen von schädigenden Medien durch die Fuge.

Die Deckschichten von Verbundplatten und -profilen und Strangpressprofile bestehen vorzugsweise aus Metall, insbesondere aus Aluminium oder einer Aluminiumlegierung, oder Kunststoff, wie z.B. Polyäthylen, Polypropylen, Polyvinylchlorid oder Polyestern. Die Kernschicht/en von Verbundplatten und -profilen besteht/bestehen beispielsweise aus einem formsteifen, geschäumten oder massiven Kunststoff oder Holz, ggf. mit brandhemmenden Zusätzen.

Die Verwendung der Stossverbindung mit wenigstens auf einer Seite flächig ausgebildeten Platten und/oder Profilen dient erfindungsgemäss der Herstellung von einheitlich erscheinenden Oberflächen mit stufenfreien Fugen im Fahrzeug-, Hoch- und Tiefbau. Besondere Bedeutung hat die Erfindung bei Karosserien und Verkleidungen.

Die erfindungsgemäss zusammengefügten Platten und/oder Profile lassen die gesamte Oberfläche fugenlos erscheinen. Falls eine auch von nahem betrachtet homogene Oberfläche erzielt werden soll, können die Fugen gespachelt und überlackiert oder überstrichen werdem, wonach auch grosse Flächen völlig einheitlich erscheinen.

Die Erfindung wird anhand von in der Zeichnung dargestellten Beispielen, welche auch Gegenstand von abhängigen Ansprüchen sind, näher erläutert. Die schematischen Schnitte zeigen in
- Fig. 1 zwei zur Stossverbindung vorbereitete Mehrschichtverbundplatten mit bis zu den Deckschichten reichenden Nuten,
- Fig. 2 zwei zur Stossverbindung vorbereitete Mehrschichtverbundplatten mit Nuten in der Kernschicht,
- Fig. 3 zwei zur Stossverbindung vorbereitete Mehrschichtverbundplatten mit nicht symmetrisch angeordneten Nuten,
- Fig. 4 zwei zur Stossverbindung vorbereitete Profile,
- Fig. 5 eine Variante von Fig. 4,
- Fig. 6 ein Spreizprofil einer ersten Variante eines Verbindungselements,
- Fig. 7 zwei verhakte Spreizprofile der ersten Variante eines Verbindungselements, mit gespanntem Federelement,
- Fig. 8 ein im wesentlichen Fig. 7 entsprechendes Verbindungselement in einer Nut gemäss Fig. 1,
- Fig. 9 das Verbindungselement gemäss Fig. 8, unmittelbar nach dem Aushaken,
- Fig. 10 die fertige Stossverbindung mit anliegenden Spreizprofilen des Verbindungselements,
- Fig. 11 eine zweite Variante eines Verbindungselements,
- Fig. 12 ein aufgeschnittenes Spreizprofil in Seitenansicht,
- Fig. 13 ein aufgeschnittenes Klammerprofil in Seitenansicht,
- Fig. 14 ein verklammertes Verbindungselement gemäss Fig. 11, und
- Fig. 15 ein Verbindungselement gemäss Fig. 11 in unverklammertem Zustand.

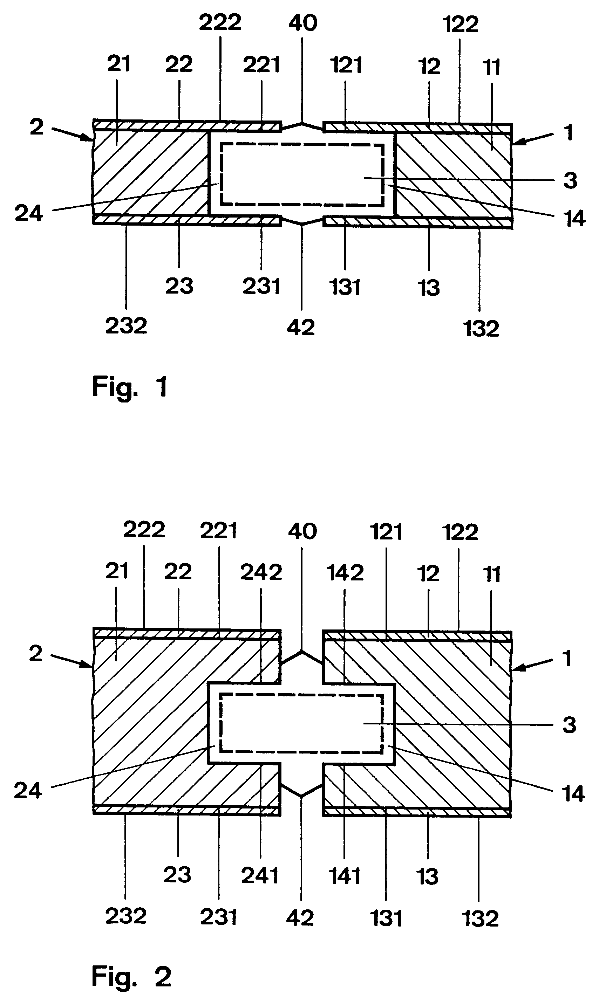

Die in Fig. 1 dargestellten Mehrschichtverbundplatten 1, 2 weisen an ihren Stirnseiten je eine querschnittlich etwa quadratische Nut 14, 24 auf, welche in Richtung der z.B. aus einer Aluminiumlegierung bestehenden Deckschichten 12, 13, 22, 23 die deren Innenflächen 121, 131, 221, 231 entsprechenden Wände haben. Diese Deckschichten sind in bekannter Weise mit Kernschichten 11, 21 beispielsweise aus Polyäthylen, verklebt. Die Stösse 40, 42 bestehen ausschliesslich aus den Stirnseiten der Deckschichten.

Die Deckschichten 12, 13, 22, 23 haben aussenliegende Deckflächen 122, 132, 222, 232.

Im von den Nuten 14, 24 gebildeten Hohlraum ist ein Verbindungselement 3 mit gespanntem Federelement gestrichelt angedeutet. Es ist gut ersichtlich, dass das gespannte Verbindungselement 3 den Hohlraum nur teilweise ausfüllt, gegenüber den Deckschichten 12, 13, 22, 23 Spiel hat und abgewinkelt werden kann.

Nach der Ausführungsform von Fig. 2 bestehen die Kernschichten 11, 21 aus einem steifen Kunststoffschaum, beispielsweise Polyurethan mit feuerhemmenden Zusätzen, und sind deshalb im Vergleich zu Fig. 1 etwas dicker ausgebildet. Im Gegensatz zu Fig. 1 liegen hier die Nuten 14, 24 ausschliesslich im Kernmaterial. Die Stirnseiten der Mehrschichtverbundplatten 1, 2, die Stösse 40, 42, bestehen aus Deckschicht- und Kernmaterial.

Nach dem Aufeinaderfügen der Stösse 40, 42 und teilweisen Entspannen des Verbindungselements 3 drückt dieses auf die Wände 141, 142, 241 und 242 der Nuten 14, 24.

Nach einer nicht dargestellten Variante können die Nuten 14, 24 auch ausserhalb der Mitte der Verbundplatten 1, 2 ausgespart sein. Weiter kann, im Prinzip gemäss Fig. 2, die Verbundplatte durch eine einstückig angebrachte Platte, z.B. eine Holzplanke ersetzt sein.

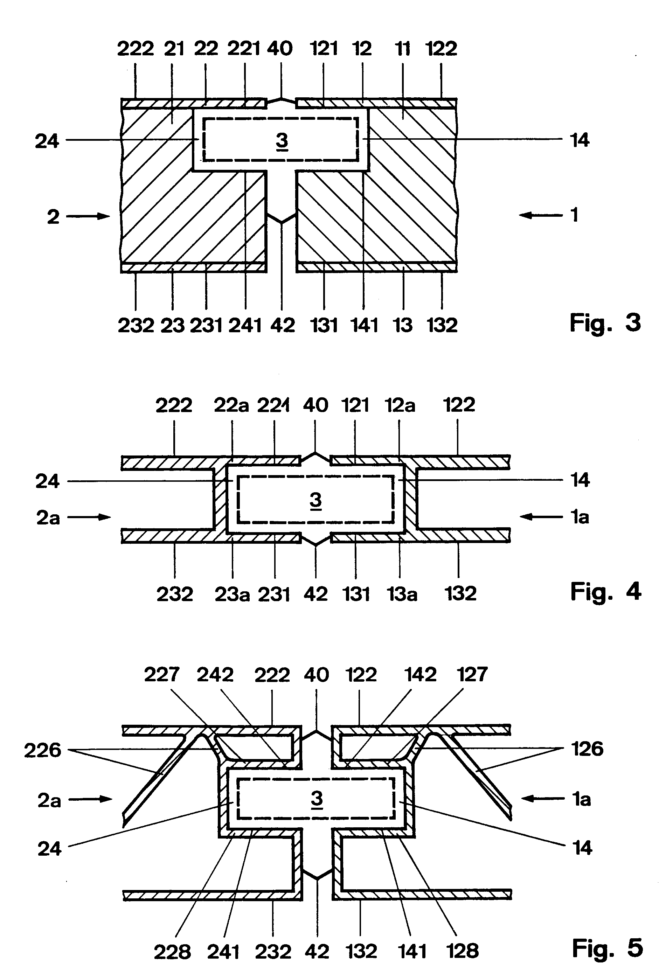

Fig. 3, im wesentlichen eine Kombination der Fig. 1 und 2, zeigt Verbundplatten 1 und 2 mit Nuten 14, 24, welche in Richtung der Deckflächen 122, 132, 222, 232 auf einer Seite von den Innenflächen 121, 221 der Deckschichten 12, 22 begrenzte, auf der anderen Seite von den Flächen 141, 142 aus Kernmaterial begrenzte Seitenwände aufweist. Nach dem Entspannen drückt das Verbindungselement auf Seitenwände der Nuten 14, 24 aus verschiedenem Material. Nach einer Variante von Fig. 3 können die Deckschichten 13, 23 fehlen.

In Fig. 4 sind zwei Profile 1a, 2a, beispielsweise Strangpressprofile aus einer Aluminiumlegierung oder Spritzprofile aus Polyäthylen, zur Stossverbindung vorbereitet. Die Stösse 40, 42 sind Stirnseiten von Profillappen 12a, 13a, 22a, 23a, welche gleichzeitig die Deckflächen 122, 132, 222, 232 und die die Nuten 14, 24 seitlich begrenzenden Innenflächen 121, 131, 221, 231 bilden. Die Verbindung der Profile 1a, 2a erfolgt analog derjenigen von Verbundplatten 1, 2 mittels eines gespannt angedeuteten Verbindungselements 3.

Die Profile 1a, 2a gemäss Fig. 5 sind von komplizierterer Querschnittsform, sie haben Verstärkungsstege 126, 226. Die Nuten 14, 24 seitlich begrenzende Profillappen 127, 128, 227, 228 dienen mit ihren Innenflächen 141, 142, 241, 242 als Auflagefläche für das gespannt eingeführte, nachher in Richtung der Deckflächen 122, 132, 222, 232 entspannte Verbindungselement 3. Selbstverständlich können die Nuten 14, 24 auch im Bereich der Mitte angeordnet sein.

Je weicher das Material der Kernschichten 11, 21 ist, desto eher wird Fig. 1 oder Fig. 3 gegenüber Fig. 2 bevorzugt, weil im ersteren Fall das teilweise entspannte Verbindungselement 3 auf vier oder zwei Deckschichten 12, 13, 22, 23 aufliegt und mit diesem verklebt ist, was eine präzisere Stossverbindung mit erhöhter mechanischer Festigkeit bewirkt. Die Stossverbindung kann auf einer Seite eine Platte, auf der anderen ein Profil haben.

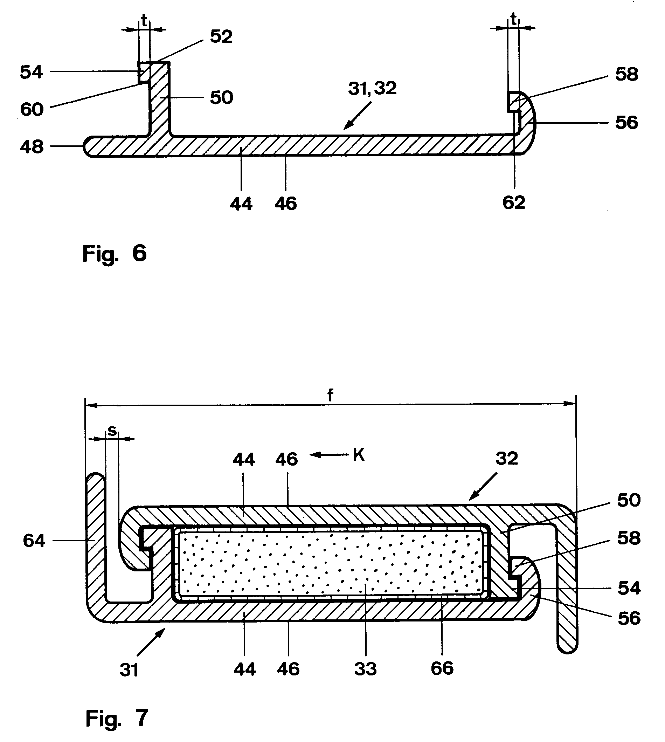

Fig. 6 zeigt identische Spreizprofile 31, 32 einer ersten Variante eines in die Nuten 14, 24 (Fig. 1-5) einsetzbaren Verbindungselements 3. Die Spreizprofile 31, 32 bestehen im wesentlichen aus einer Grundplatte 44 mit einer ebenen Aussenfläche 46. Von der dieser Fläche 46 abgewandten Seite kragt benachbart des seitlichen Randes 48 in vertikaler Richtung ein erster Längssteg 50 ab. An dessen Stirnseite 52 ist seitlich eine erste hinterschnittene Hakenleiste 54 ausgebildet, wobei die hinterschnittene Fläche 60 die Breite t hat.

Am andern Ende der Grundplatte 44 ist ein zweiter Längssteg 56 ausgebildet, welcher im vorliegenden Fall als abgebogener Teil ausgebildet ist. Dieser Teil bildet eine zweite Hakenleiste 58, welche wiederum eine hinterschnittene Fläche 62 der Breite t hat. Nach einer nicht dargestellten Variante kann der zweite Längssteg 56 gleich hoch ausgebildet sein wie der erste.

Die bei beiden Längsstegen auf derselben Seite ausgebildeten Hakenleisten 54, 58 mit den hinterschnittenen Flächen 60, 62 bilden Einhaknuten.

Der Abstand des seitlichen Randes 48 muss grösser sein als die gesamte Breite des zweiten Längsstegs 56 in Richtung der Grundplatte 44.

In Fig. 7 sind zwei miteinander verhakte Spreizprofile 31, 32 dargestellt, wobei diese jedoch einen nach der Ausführungsform von Fig. 6 nicht vorhandenen, kürzeren Schenkel 64 haben und im wesentlichen L-förmig erscheinen. Diese kürzeren Schenkel 64, welche den ersten, höheren Steg 50 deutlich überragen sind einstückig mit der Grundplatte 44, dem längeren Schenkel, ausgebildet.

Je eine Hakenleiste 54 des ersten Längsstegs 50 und eine Hakenleiste 58 des abgebogenen, niedrigen Längsstegs 56 sind miteinander über die hinterschnittenen Flächen 60, 62 verhakt.

Der Abstand s des abgebogenen, niedrigen Längsstegs 56 des einen Spreizprofils vom kürzeren Schenkel 64 des anderen Spreizprofils ist etwas grösser als die Länge t der hinterschnittenen Fläche 60, 62 der Hakenleisten 54, 58. Falls z.B. das eine Spreizprofil 31 fixiert ist und auf das andere Spreizprofil 32 eine Kraft K in der gezeichneten Richtung einwirkt, wird das Spreizprofil 32 so verschoben, dass die erwähnten hinterschnittenen Flächen 60, 62 nicht mehr aufeinander, sondern nebeneinander liegen.

Das Federelement 33 besteht aus einer an den Spreizprofilen 31, 32 bzw. an deren ersten Längsstegen 50 anliegenden, elastischen Hülle 66, welche ein unter Druck gesetztes gasförmiges Medium, zweckmässig Luft, enthält. Der Gasdruck in der Hülle 66 liegt üblicherweise beim zwei- bis dreifachen Normaldruck, je nach dem Spielraum des in die Nuten 14, 24 (Fig. 1-5) eingesetzten Verbindungselements 30.

Wird das Spreizprofil 32 durch Krafteinwirkung K relativ zum Spreizprofil 31 verschoben, so kann das Spreizprofil 32 aushaken. Die elastische Hülle 66 dehnt sich aus, bis das Gleichgewicht erreicht ist oder die Spreizprofile 31, 32 auf einen Widerstand stossen.

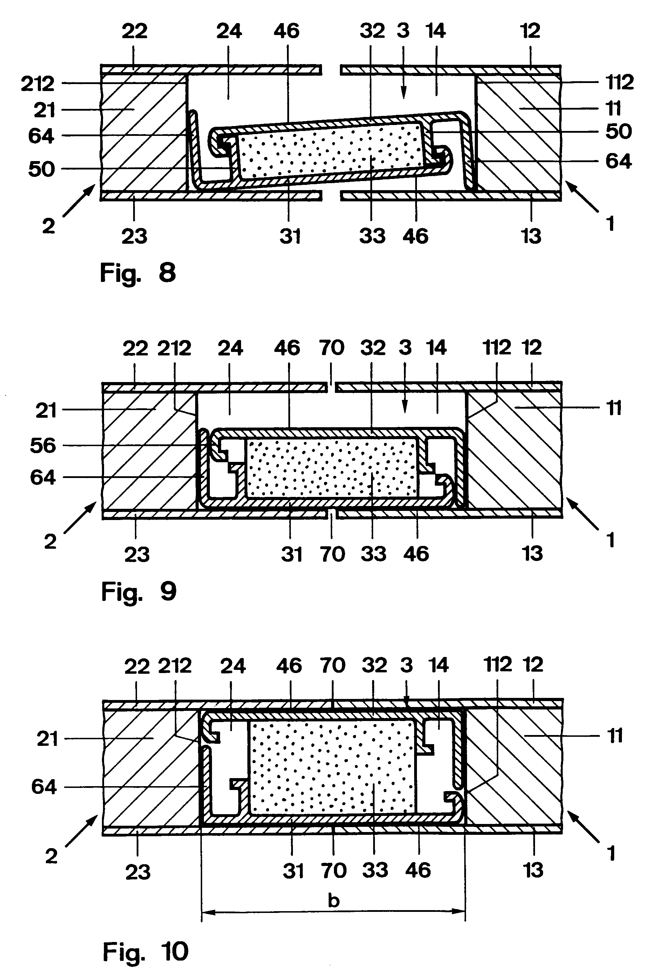

Fig. 8 zeigt zwei für eine Stossverbindung vorbereitete Mehrschichtverbundplatten 1, 2 mit je einer ausgesparten Nut 14, 24, wobei die Kernschichten 11, 21 im Bereich der Nuten vollständig entfernt sind, entsprechend Fig. 1.

In die Nuten 14, 24 eingeführt ist ein Verbindungselement 3, welches zumindest in Richtung vertikal zu den Deckschichten 11, 12, 22, 23 einen breiten Spielraum hat. Es versteht sich von selbst, dass die Nuten 14, 24 auch gemäss Fig. 2-5 ausgebildet sein können.

Das Verbindungselement 3 besteht aus zwei verhakten Spreizprofilen 31, 32, wie dies in Fig. 7 detailliert dargestellt ist. Das Federelement 33 besteht aus einem sich in Längsrichtung des Verbindungselements 3 erstreckenden, zusammengepressten Block aus Moosgummi, einem geschlossenzelligen Weichschaumkunststoff.

Die beiden kürzeren Schenkel 64, der Spreizprofile 31, 32 liegen an den Stirnseiten 112, 212 der Kernschichten 11, 12 an.

Aus Fig. 8 ist auch ersichtlich, weshalb die in bezug auf den ersten Längssteg 50 längere Ausbildung des kürzeren Schenkels 64 vorteilhaft ist. Dadurch kann die äussere Fläche 46 der Spreizprofile 31, 32 nicht auf einer Deckschicht 12, 13, 22, 23 aufliegen. Beim Aufliegen würde während des Einschiebens des Verbindungselements 3 ein auf die äusseren Flächen 46 und/oder die Innenflächen der Deckschichten 12, 13, 22, 23 aufgetragener Kleber abgestossen.

In Fig. 9 sind die beiden Mehrschichtverbundplatten 1, 2 um wenigstens die Distanz t (Fig. 6), entsprechend den hinterschnittenen Flächen der Hakenleisten 54, 58, in Richtung der Deckschichten 12, 13, 22, 23 verschoben worden. Die Verrastung hat sich soeben gelöst und das Spreizprofil 31 ist auf die Deckschichten 13, 23 gefallen. Das Federelement 33 hat begonnen, das Spreizprofil 32 in Richtung der Deckschichten 12, 22 zu stossen. Die Fugen 70 zwischen den Deckschichten 12, 22 bzw. 13 und 23 sind noch nicht ganz geschlossen, weil der zweite, niedrigere Längssteg 56 auf den kürzeren Schenkel 64 stösst.

Nach dieser Variante löst sich also die Verrastung automatisch und zwangsläufig, wenn die beiden Mehrschichtverbundplatten 1, 2 mit eingelegtem, gespanntem Verbindungselement 3 stirnseitig unter geringem Kraftaufwand gegeneinander gestossen werden.

In der Darstellung gemäss Fig. 10 hat das Federelement 33 das Spreizprofil 32 bis zum Anschlag gegen die Deckschichten 12, 22 verschoben. Die Mehrschichtverbundplatten 1, 2 können nun vollständig gegeneinander gestossen werden, sodass die Fugen 70 vollständig geschlossen sind. Da alle Deckschichten 12, 13, 22, 23 auf der ebenen Fläche 46 eines Verbundprofils 31, 32 aufliegen, ist der Uebergang von einer Deckschicht zur andern niveaugleich. Deshalb können die geschlossenen Fugen 70 kaum bemerkt werden.

Das Federelement 33 drückt die Spreizprofile 31, 32 gegen die Deckschichten 12, 13, 22, 23 und erlaubt ein stabilisiertes Aushärten des Klebers. Nach dem vollständigen Aushärten des Klebers ist die Stossverbindung nicht nur kaum sichtbar, sondern auch mechanisch stabil und gegen schädigende äussere Einflüsse geschützt.

Der Abstand b der Stirnseiten 112, 212 der Kernschichten 11, 21 liegt bei fugenlos aneinanderliegenden Deckschichten 12, 13, 22, 23 zwischen der Länge f der verhakten Spreizprofile 31, 32 (Fig. 7), vermindert um die Breite t der hinterschnittenen Flächen 60, 62, und der Länge eines Spreizprofils 31, 32. Allfällige, die Breite t überragende Teile der Hakenleisten 54, 58 werden zur abzuziehenden Breite t zugeschlagen. Die Stirnseiten 112, 212 sind auch die Basisflächen der Nuten 14, 24.

Nach einer nicht dargestellten Variante kann der kürzere Schenkel 64 der Spreizprofile 31, 32 so lang ausgebildet sein, dass die zweiten Längsstege 56 auch in der Endlage auf dem kürzeren Schenkel 64 aufliegen. In diesem Fall ist der minimale Abstand b der Kernschichten 11, 22 entsprechend grösser. Die Länge des kürzeren Schenkels 64 ist durch den Abstand der Deckschichten 12, 13 bzw. 22, 23 begrenzt.

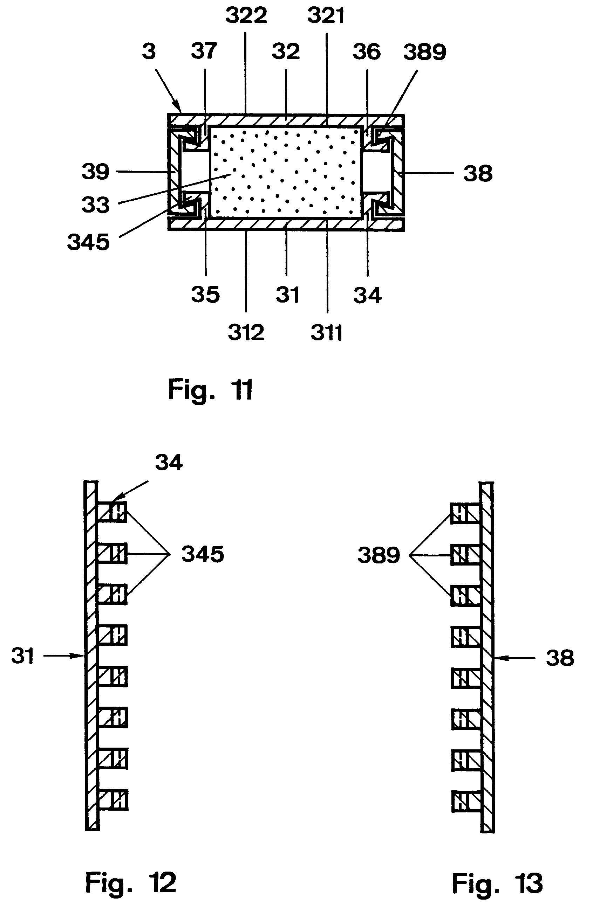

Eine in Fig. 11 dargestellte zweite Variante des Verbindungselements 3 umfasst zwei Spreizprofile 31, 32 mit dazwischen liegendem Federelement 33, wobei die Spreizprofile 31, 32 symmetrisch zueinander angeordnet sind und jeweils auf der dem Federelement 33 zugekehrten Seite 311, 321 und beidseits desselben zwei Zahnhakenleisten 34, 35; 36, 37 aufweisen. Jeweils zwei Zahnhakenleisten 34, 36 bzw. 35, 37 sind mit Klammerprofilen 38 bzw. 39 derart verklammert, dass das Federelement 33 vorgespannt und gegenüber der Stellung ohne Verklammerung eine Abstandsverringerung eingetreten ist.

Auf den äusseren Flächen 312, 322 der Spreizprofile 31, 32 wird ein Klebstoff, vorzugsweise punktförmig, aufgetragen, und das gespannte Verbindungselement 30 mit Spiel in eine Nut 14, 24 (Fig. 1-5) eingebracht. Durch Lösen der Verklammerung nach dem Einbringen des Verbindungselements 3 in die Nuten 14, 24 werden die Spreizprofile 31, 32 durch Entspannung des Federelements 33 auf die entsprechenden Flächen 121, 131, 221, 231 bzw. 141, 142, 241, 242 der Nuten 14, 24 gedrückt und es erfolgt mit diesen eine Verklebung.

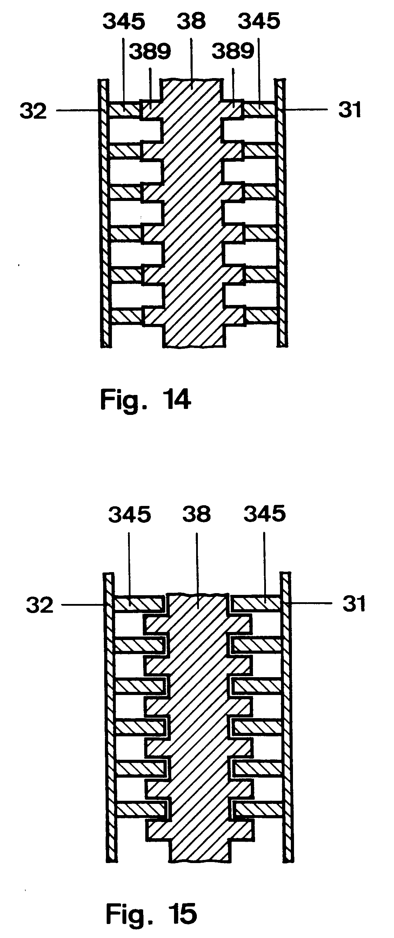

Die Zahnhakenleisten 34, 35, 36, 37 der Spreizprofile 31, 32 und die Klammerprofile 38, 39 sind, wie in Fig. 12 und 13 gezeigt, kammartig mit Zähnen 345, 389 versehen. Die Verklammerung wird dadurch bewirkt, dass die Zahnhakenleisten 34, 35, 36, 37 und die Klammerprofile 38, 39 in eine derartige Stellung gebracht werden, dass die Zähne 345, 389 im Eingriff stehen (Fig. 14). Zum Lösen der Verklammerung nach Einbringen des Verbindungselements 3 in die Nuten 14, 24 wird dann beispielsweise durch einen Schlag auf die Klammerprofile 38, 39 die Anordnung der Zahnhakenleisten 34, 35, 36, 37 und der Klammerprofile 38, 39 gegeneinander derart verschoben, dass die Zähne 389 der Klammerprofile 38, 39 in die Zahnlücken der Zahnhakenleisten 34, 35, 36, 37, also zwischen den Zähnen 345, zu liegen kommen, wonach aufgrund der Spannkraft des Federelements 33 eine Abstandsvergrösserung zwischen den Spreizprofilen 31, 32 erfolgen kann (Fig. 15).

Bevorzugt bestehen die Spreizprofile 31, 32 aus Metall und die Klammerprofile 38, 39 aus Kunststoff. In einer weiteren bevorzugten Ausführungsform bestehen die Spreizprofile 31, 32 aus demselben Metall wie die Deckschichten 12, 13; 22, 33 der Verbundplatten 1, 2 bzw. wie die Profile 1a, 2a, insbesondere aus Aluminium oder einer Aluminiumlegierung.

## Patentansprüche

1. Stossverbindung von Platten (1, 2) und/oder Profilen (1a, 2a) mittels eines Verbindungselements (3), wobei das Verbindungselement (3) in zwei entlang der Stösse (40, 42) der Platten (1, 2) und/oder Profile (1a, 2a) aufeinanderliegenden, einen Hohlraum bildenden Nuten (14, 24) angeordnet ist und aus zwei von wenigstens einem zwischenliegenden Federelement (33) in Richtung der Deckflächen (122, 132, 222, 232) der Platten (1, 2) bzw. Profile (1a, 2a) verschiebbaren, mit den entsprechenden Wänden (121, 131, 221, 231; 141, 142, 241, 242) der Nuten (14, 24) festlegbaren Spreizprofilen (31, 32) besteht,
dadurch gekennzeichnet, dass
die Spreizprofile (31, 32) Arretierungsmittel aufweisen, so dass die beiden Spreizprofile (31, 32) miteinander arretierbar und im arretierten Zustand mit Spiel in die Nuten (14, 24) einführbar sind, und die Arretierung der in die Nuten (14, 24) eingeführten Spreizprofile (31, 32) lösbar ist, und nach Lösen der Arretierung bedingt durch die Verspannung im wenigstens einen Federelement die Spreizprofile auseinandergedrückt werden, und die mit den Wänden (121, 131, 221, 231; 141, 142, 241, 242) der Nuten (14, 24) in Berührung kommende Aussenflächen (46, 312, 322) der Spreizprofile (31, 32) flach und mit den Wänden (121, 131, 221, 231; 141, 142, 241, 242) der Nuten (14, 24) verklebbar sind.

2. Stossverbindung nach Anspruch 1, dadurch gekennzeichnet, dass die Nuten (14, 34) an den Stössen (40, 42) der Mehrfachverbundplatten (1, 2) querschnittlich rechteckig oder quadratisch ausgebildet sind.

3. Stossverbindung nach Anspruch 1 oder 2, dadurch gekennzeichnet, dass das Federelement/die Federelemente (33) seine Wirkung gleichmässig über die ganze Länge des Verbindungselements (3) entfaltet/entfalten.

4. Stossverbindung nach einem der Ansprüche 1 bis 3, dadurch gekennzeichnet, dass das Federelement (33) aus einem zwischen den Spreizprofilen (31, 32) angeordneten, sich über die ganze Länge des Verbindungselements (3) erstreckenden, elastischen Kunststoffblock besteht.

5. Stossverbindung nach Anspruch 4, dadurch gekennzeichnet, dass der Kunststoffblock aus einem Schaumstoff, vorzugsweise einem geschlossenporigen Weichschaumstoff, besteht.

6. Stossverbindung nach einem der Ansprüche 1 bis 3, dadurch gekennzeichnet, dass das Federelement (33) aus einer zwischen den Spreizprofilen (31, 32) angeordneten, einen Überdruck aufweisenden elastischen Hülle (66) besteht, welche mit einem gasförmigen Medium, vorzugsweise Luft, gefüllt ist und sich über die ganze Länge des Verbindungselements (3) erstreckt.

7. Stossverbindung nach einem der Ansprüche 1 bis 6, dadurch gekennzeichnet, dass die Spreizprofile (31, 32) des Verbindungselements (3) im wesentlichen aus einer Grundplatte (44) mit beidends nach der gleichen Seite abkragenden Längsstegen (50, 56) bestehen, welche im Bereich ihrer Stirnseiten (52) hinterschnittene, durch eine Hakenleiste (54, 58) gebildete Flächen (60, 62) haben.

8. Stossverbindung nach Anspruch 7, dadurch gekennzeichnet, dass zur Bildung einer automatisch lösbaren Arretierung zwei verhakte Spreizprofile (31, 32) mit gespanntem Federelement (33) eine gesamte Breite (f) aufweisen, welche um wenigstens die Breite (t) der hinterschnittenen Flächen (60, 62) grösser ist als der Abstand (b) der Basisflächen (112, 212) der Nuten (14, 24) bei aneinanderliegenden Deckschichten (12, 13, 22, 23), und die Länge eines Spreizprofils (31, 32) höchstens dem erwähnten Abstand (b) entspricht.

9. Stossverbindung nach Anspruch 7 oder 8, dadurch gekennzeichnet, dass die rechtwinklig von der Grundplatte (44) abkragenden Längsstege (50, 56) ungleich hoch sind und der niedrigere Längssteg ein abgewinkeltes oder abgebogenes Ende der Grundplatte (44) ist.

10. Stossverbindung nach einem der Ansprüche 7 bis 9, dadurch gekennzeichnet, dass die Spreizprofile (31, 32) des Verbindungselements (3) in, wesentlichen L-förmig ausgebildet sind, wobei der längere Schenkel die Grundplatte (44) bildet und der kürzere Schenkel (64) länger als der erste Längssteg (50), jedoch kleiner als der Abstand der Wände (121, 131, 221, 231; 141, 142, 241, 242) der Nuten (14, 24) ist.

11. Stossverbindung nach einem der Ansprüche 1 bis 6, dadurch gekennzeichnet, dass die Spreizprofile (31, 32) jeweils auf der dem Federelement (33) zugekehrten Seite (311, 321) und beidseits desselben zwei Zahnhakenleisten (34, 35, 36, 37) aufweisen, welche zum Einbringen des Verbindungselementes (3) in die Nuten (14, 24) mit eine Vorspannung des Federelements (33) und eine Abstandsverringerung bewirkenden Klammerprofilen (38, 39) verklammert sind, wobei die Verklammerung durch die im Eingriff stehenden Zähne (345, 389) bewirkt und durch das Verschieben der Klammerprofile (38, 39) um wenigstens ein Vielfaches der Zahnbreite lösbar ist.

12. Verwendung der Stossverbindung nach einem der Ansprüche 1 bis 11 mit wenigstens auf einer Seite flächig ausgebildeten Platten (1, 2) und/oder Profilen (1a, 2a) zur Herstellung von einheitlich er scheinenden Oberflächen mit stufenfreien Fugen im Fahrzeug-, Hoch- und Tiefbau.

## Claims

1. Butt joint of plates (1, 2) and/or sections (1a, 2a) by means of a connecting element (3) in which the connecting element (3) is arranged in two grooves (14, 24) lying against one another along the butt-ends (40, 42) of the plates (1, 2) and/or sections (1a, 2a) to form a cavity and consists of two expanding sections (31, 32) displaceable by at least one intervening spring element (33) in the direction of the outer surfaces (122, 132, 222, 232) of the plates (1, 2) or sections (1a, 2a) and can be fixed to the corresponding walls (121, 131, 221, 231; 141, 142, 241, 242) of the grooves (14, 24),
characterised in that
the expanding sections (31, 32) comprise locking means so that the two expanding sections (31, 32) can be locked together and in the locked state can be introduced with play into the grooves (14, 24), and the locking of the expanding sections (31, 32) introduced into the grooves (14, 24) can be released and after release of the locking, depending on the tension in at least one spring element, the expanding sections are pushed apart and the outer surfaces (46, 312, 322) of the expanding sections (31, 32) coming into contact with the walls (121, 131, 221, 231; 141, 142, 241,242) of the grooves (14, 24) are flat and can be glued to the walls (121, 131, 221, 231; 141, 142, 241, 242) of the grooves (14, 24).

2. Butt joint according to claim 1, characterised in that the grooves (14, 34) at the butt-ends (40, 42) of the multiple layered plates (1, 2) are constructed with a rectangular or square cross-section.

3. Butt joint according to claim 1 or 2, characterised in that the spring element/elements (33) exerts/exert its action uniformly over the entire length of the connecting element (3).

4. Butt joint according to any of the claims 1 to 3, characterized in that the spring element (33) consists of an elastic plastic block arranged between the expanding sections (31, 32) and extending over the entire length of the connecting element (3).

5. Butt joint according to claim 4, characterised in that the plastic block consists of a foam material, preferably a closed-pore soft foam material.

6. Butt joint according to any of the claims 1 to 3, characterised in that the spring element (33) consists of an elastic sheath (66) having excess pressure arranged between the expanding sections (31, 32) which is filled with a gaseous medium, preferably air, and extends over the entire length of the connecting element (3).

7. Butt joint according to any of the claims 1 to 6, characterised in that the expanding sections (31, 32) of the connecting element (3) consist essentially of a base plate (44) with longitudinal legs (50, 56) projecting towards the same side at both ends which in the region of their end faces (52) have undercut surfaces (60, 62) formed by a hook ledge (54, 58).

8. Butt joint according to claim 7, characterised in that for the formation of an automatically releasable locking means two hooked expanding sections (31, 32) with tensioned spring element (33) exhibit a total width (f) which is greater by at least the width (t) of the undercut surfaces (60, 62) than the separation (b) of the base surfaces (112, 212) of the grooves (14, 24) when the outer layers (12, 13, 22, 23) are adjacent to one another and the length of an expanding section (31, 32) corresponds at most to the mentioned separation (b).

9. Butt joint according to claim 7 or 8, characterised in that the longitudinal legs (50, 56) projecting at right angles from the base plate (44) are of unequal height and the lower longitudinal leg is an end of the base plate (44) which has been turned or bent up.

10. Butt joint according to any of the claims 7 to 9, characterised in that the expanding sections (31, 32) of the connecting element (3) are constructed essentially in an L-shape, in which the longer limb forms the base plate (44) and the shorter limb (64) is longer than the first longitudinal leg (50) but smaller than the separation of the walls (121, 131, 221, 231; 141, 142, 241, 242) of the grooves (14, 24).

11. Butt joint according to any of the claims 1 to 6, characterised in that the expanding sections (31, 32) on the side (311, 321) facing the spring element (33) and at both ends of the latter each have two toothed hook ledges (34, 35, 36, 37) which are clamped by clasp sections (38, 39) effecting pre-tensioning of the spring element (33) and a reduction of the separation for introducing the connecting element (3) into the grooves (14, 24), the clamping being effected by teeth (345, 389) which are in engagement and being releasable by the displacement of the clasp sections (38, 39) by at least a multiple of the width of the teeth.

12. Use of the butt joint according to any of the claims 1 to 11 with plates (1, 2) and/or sections (1a, 2a) constructed flat on at least one side for the production of apparently uniform surfaces with continuous joints in vehicle construction and in civil engineering.

## Revendications

1. Jonction bout-à-bout de plaques (1, 2) et/ou de profilés (1a, 2a) au moyen d'un élément de jonction (3), l'élément de jonction (3) étant disposé dans deux gorges (14, 24) formant une cavité, superposées le long des jointures (40, 42) des plaques (1, 2) et/ou des profilés (1a, 2a), et se composant de deux profilés écartables (31, 32), déplaçables à l'aide d'au moins un élément ressort intercalé (33) dans la direction des surfaces de couverture (122, 132, 222, 232) des plaques (1, 2) ou des profilés (1a, 2a) et fixables aux parois correspondantes (121, 131, 221, 231 ; 141, 142, 241, 242) des gorges (14, 24),
caractérisée en ce que
les profilés écartables (31, 32) présentent des moyens de blocage de sorte que les deux profilés écartables (31, 32) peuvent conjointement être bloqués et introduits à l'état bloqué avec un certain jeu dans les gorges (14, 24) et que le blocage des profilés écartables (31, 32) introduits dans les gorges (14, 24) est réversible et qu'après suppression du blocage, les profilés écartables sont écartés l'un de l'autre en raison de la tension d'au moins un élément ressort et que les surfaces externes (46, 312, 322) des profilés écartables (31, 32) venant en contact avec les parois (121, 131, 221, 231 ; 141, 142, 241, 242) des gorges (14, 24) sont plates et collables aux parois (121, 131, 221, 231 ; 141, 142, 241, 242) des gorges (14, 24).

2. Jonction bout-à-bout selon la revendication, caractérisée en ce que les gorges (14, 34) aux jointures (40, 42) des plaques composites multicouches (1, 2) ont une section rectangulaire ou carrée.

3. Jonction bout-à-bout selon la revendication 1 ou 2, caractérisée en ce que l'élément ressort/les éléments ressorts (33) exerce/exercent son/leur action régulièrement sur toute la longueur de l'élément de jonction (3).

4. Jonction bout-à-bout selon une des revendications 1 à 3, caractérisée en ce que l'élément ressort (33) se compose d'un bloc de matière synthétique élastique disposé entre les profilés écartables (31, 32) et s'étendant sur toute la longueur de l'élément de jonction (3).

5. Jonction bout-à-bout selon la revendication 4, caractérisée en ce que le bloc de matière synthétique est en une mousse, de préférence une mousse molle à pores fermés.

6. Jonction bout-à-bout selon une des revendications 1 à 3, caractérisée en ce que l'élément ressort (33) se compose d'une enveloppe élastique (66) disposée entre les profilés écartables (31, 32), présentant une surpression et emplie d'un milieu gazeux, de préférence l'air, et s'étend sur toute la longueur de l'élément de jonction (3).

7. Jonction bout-à-bout selon une des revendications 1 à 6, caractérisée en ce que les profilés écartables (31, 32) de l'élément de jonction (3) se composent essentiellement d'une plaque de base (44) présentant à ses deux extrémités des ailes longitudinales (50, 56) dépassant du même côté et qui présentent au niveau de leurs faces frontales (52) des surfaces (60, 62) contre-dépouillées, formées par une nervure formant crochet (54, 58).

8. Jonction bout-à-bout selon la revendication 7, caractérisée en ce que, pour former un blocage automatiquement réversible, deux profilés écartables (31, 32) accrochés à l'élément ressort (33) sous tension présentent une largeur totale (f) qui est supérieure d'au moins la largeur (t) des surfaces contre-dépouillées (60, 62) à la distance (b) entre les surfaces de base (112, 212) des gorges (14, 24) lorsque les couches de couverture (12, 13, 22, 23) sont accolées et en ce que la longueur d'un profilé écartable (31, 32) correspond au maximum à la distance (b) évoquée.

9. Jonction bout-à-bout selon la revendication 7 ou 8, caractérisée en ce que les ailes longitudinales (50, 56) dépassant perpendiculairement de la plaque de base (44) sont de hauteur différente et que l'aile longitudinale la plus courte est une extrémité pliée ou coudée de la plaque de base (44).

10. Jonction bout-à-bout selon une des revendications 7 à 9, caractérisée en ce que les profilés écartables (31, 32) de l'élément de jonction (3) ont sensiblement la forme d'un L, le grand côté formant la plaque de base (44) et le petit côté (64) étant plus long que la première aile longitudinale (50), mais plus petit que la distance entre les parois (121, 131, 221, 231 ; 141, 142, 241, 242) des gorges (14, 24).

11. Jonction bout-à-bout selon une des revendications 1 à 6, caractérisée en ce que les profilés écartables (31, 32) présentent chacun du côté (311, 321) tourné vers l'élément ressort (33) et de part et d'autre de ce dernier deux nervures formant des crochets dentés (34, 35, 36, 37) qui sont agrafées en vue de l'introduction de l'élément de jonction (3) dans les gorges (14, 24) à des profilés agrafables (38, 39) induisant une prétension de l'élément ressort (33) et une diminution de la distance, l'agrafure étant opérée par les dents (345, 389) se trouvant en prise et étant réversible par déplacement des profilés agrafables (38, 39) d'au moins un multiple de la largeur d'une dent.

12. Utilisation de la jonction bout-à-bout selon une des revendications 1 à 11 avec des plaques (1, 2) et/ou des profilés (1a, 2a) présentant au moins une surface plane sur une face en vue de la réalisation de surfaces d'aspect uniforme à joints sans différence de niveau dans la construction automobile, le bâtiment et le génie civil.
